# EUROPEAN PATENT APPLICATION

(11) **EP 2 937 795 A1**
(43) Date of publication of application: **28.10.2015**
(21) Application number: 14197972.4
(22) Date of filing: 15.12.2014
(51) Int. Cl.: G06F 17/30

(54) **Search result displaying method and device**

(30) Priority: 22.04.2014 CN 201410161129
(71) Applicant: Baidu Online Network Technology (Beijing) Co., Ltd, Beijing 100085 (CN)
(72) Inventor: Liu, Ping, 100085 Beijing (CN); Zheng, Kuan, 100085 Beijing (CN); Cheng, Hao, 100085 Beijing (CN)
(74) Representative: advotec.

(57) **Abstract**

A search result displaying method and device are provided. The search result displaying method includes receiving a search word; obtaining a first search result and a second search result according to the search word, wherein the first search result comprises information of an entity corresponding to the search word, and the second search result comprises information of each entity in a field and/or attribution to which the search word belongs; and displaying the first search result and the second search result.

## Description

### FIELD

Embodiments of the present disclosure generally relate to a communication technology field, and more particularly to a search result displaying method and a search result displaying device.

### BACKGROUND

As a user needs to search information from a great deal of information in the internet, a search engine becomes an essential tool. As there is a great deal of information in each field, the user as an individual who is interested in information in one field may focus on only one unilateral point when needing to know information in this field, and therefore it is hard for the user to learn an overall perspective of this field. The user may learn knowledge and information in a field according to one unilateral point, however, the user also wishes to get a summary and an overall perspective of this field.

In the related art, the search engine can only provide a part of information related to a search point provided by the user in a field, and therefore the obtained searching result is incomplete and cannot satisfy requirements of the user.

### SUMMARY

Embodiments of the present disclosure seek to solve at least one of the problems existing in the related art to at least some extent.

Accordingly, a first objective of the present disclosure is to provide a search result displaying method, which can provide complete information in a field of a search point input by the user and satisfy requirements of the user.

A second objective of the present disclosure is to provide a search result displaying device.

In order to achieve above objectives, embodiments of an aspect of the present disclosure provide a search result displaying method. The search result displaying method according to embodiments of the present disclosure includes: receiving a search word; obtaining a first search result and a second search result according to the search word, in which the first search result includes information of an entity corresponding to the search word, and the second search result includes information of each entity in a field and/or attribution to which the search word belongs; and displaying the first search result and the second search result.

With the search result displaying method according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied, and the search efficiency may be improved.

Embodiments of another aspect of the present disclosure provide a search result displaying device. The search result displaying device according to embodiments of the present disclosure includes: a receiving module configured to receive a search word; an obtaining module configured to obtaining a first search result and a second search result according to the search word, in which the first search result includes information of an entity corresponding to the search word, and the second search result includes information of each entity in a field and/or attribution to which the search word belongs; and a displaying module configured to display the first search result and the second search result.

With the search result displaying device according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied, and the search efficiency may be improved.

Embodiments of a further aspect of the present disclosure provide a client device. The client device includes: a shell, a processor, a memory, a circuit board and a power circuit, in which the circuit board is disposed in an interior space enclosed by the shell, the processor and the memory are both disposed on the circuit board, the power circuit is configured to provide power to each circuit and components of the client device, the memory is configured to store an executable program code, and the processor is configured to run a program corresponding to the executable program code by reading the executable program code so as to execute the following steps: receiving a search word; obtaining a first search result and a second search result according to the search word, in which the first search result includes information of an entity corresponding the search word, and the second search result includes information of each entity in a field and/or attribution to which the search word belongs; and displaying the first search result and the second search result.

With the client device according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied, and the search efficiency may be improved.

Embodiments of a further aspect of the present disclosure provide a computer readable storage medium. The computer readable storage medium includes a computer program for executing the search result displaying method according to embodiments of an aspect of the present disclosure, when running on a computer.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a flow chart showing a search result displaying method according to an embodiment of the present disclosure;
Fig. 2 is a schematic diagram showing a process of a search result displaying method according to another embodiment of the present disclosure;
Fig. 3 is a schematic diagram of a displayed search result according to an embodiment of the present disclosure;
Fig. 4 is a schematic diagram of a displayed search result in the related art;
Fig. 5 is a schematic diagram showing a search result webpage switched to according to an embodiment of the present disclosure;
Fig. 6 is a block diagram of a search result displaying device according to an embodiment of the present disclosure; and
Fig. 7 is a block diagram of a search result displaying device according to another embodiment of the present disclosure.

### DETAILED DESCRIPTION

Reference will be made in detail to embodiments of the present disclosure. Embodiments of the present disclosure will be shown in drawings, in which the same or similar elements and the elements having same or similar functions are denoted by like reference numerals throughout the descriptions. The embodiments described herein according to drawings are explanatory and illustrative, not construed to limit the present disclosure.

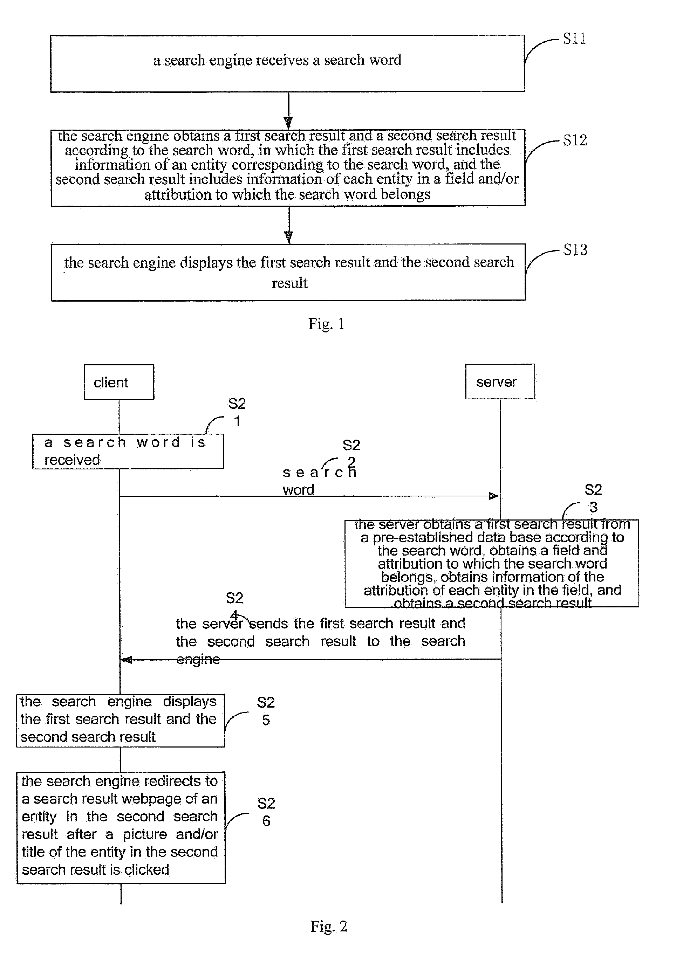

Fig. 1 is a flow chart showing a search result displaying method according to an embodiment of the present disclosure. The search result displaying method according to embodiments of the present disclosure includes the following steps.

At step S 11, a search engine receives a search word.

For example, if a user would like to keep a dog and focus on an intelligence quotient (IQ) of the dog, the search word input by the user may include "Samoyed IQ".

At step S12, the search engine obtains a first search result and a second search result according to the search word, in which the first search result includes information of an entity corresponding to the search word, and the second search result includes information of each entity in a field and/or attribution to which the search word belongs.

In some embodiments, the first search result may be used to satisfy a main requirement of the user, and the information of the entity corresponding to the search word may include search result information of the entity described by the search word. For example, as to the above search word "Samoyed IQ", information of the entity corresponding to the search word may be information of Samoyed, for example, rank of Samoyed IQ.

In the specification of the present disclosure, the term "entity" may refer to distinguishable things existing in the objective word. The entity may include a person, an object, or an abstract concept. For example, the entity may include at least one of "Samoyed" and "Husky".

In some embodiments, the second search result is configured to provide relatively complete information in the field and/or attribution to which the search word belongs, so as to satisfy potential requirements of the user. The information of each entity in the field and/or attribution to which the search word belongs may refer to search result information of each entity in a field and/or attribution to which the entity described by the search word belongs. For example, for the above search word "Samoyed IQ", the field to which the search word belongs is dog, and the attribution to which the search word belongs is IQ. The second search result may include an IQ rank of each dog in the dog field. For example, the second search result may further include an IQ of Husky and an IQ of Tibetan mastiff.

At step S13, the search engine displays the first search result and the second search result.

In some embodiments, the first search result and the second search result may be displayed in different areas. For example, the first search result is displayed above the second search result.

In the related art, only a search result of the main requirement is obtained. For example, when the search word is "Samoyed IQ", only information related to IQ of Samoyed is displayed, and after this search action, the user may add a search word "Husky IQ". The potential requirement of the user may be which dog has higher IQ and is suitable to keep. The user, however, does not know how to achieve the object. Therefore, the user may give up searching after several searches, without satisfying the requirements.

With the search result displaying method according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied, and the search efficiency may be improved.

Fig. 2 is a schematic diagram showing a process of a search result displaying method according to another embodiment of the present disclosure. The search result displaying method according to embodiments of the present disclosure includes the following steps.

At step S21, a search engine receives a search word.

For example, the search word input by a user may include "Samoyed IQ".

In some embodiments, the search engine is disposed in a client. In the present embodiment, as an example, the search engine in the client may interact with a server to obtain a first search result and a second search result.

At step S22, the search engine sends the search word to a server.

At step S23, the server obtains a first search result from a pre-established data base according to the search word, obtains a field and attribution to which the search word belongs, obtains information of the attribution of each entity in the field, and obtains a second search result.

In some embodiments, the data base may be a structured entity data base, and the data base may record each entity and attribution information corresponding to each entity. For example, the attribution information of each pet type may be pre-collected, and the attribution information includes, for example, keeping difficulty, IQ, and price. Then, each pet type and attribution information of the each pet type may be correspondingly stored in the structured entity data base. In some embodiments, the entities in the structured entity data base may have relations, such as a peering relation and an affiliation relation. For example, Husky and Samoyed are in a peering relation, while Husky and dog are in an affiliation relation. When obtaining information of an entity, the information of the entity may be obtained according to an index searching. Alternatively, the information of the entity may be obtained by searching according to the relation between entities.

In some embodiments, the first search result includes information of the entity corresponding to the search word. Each entity may be a species of each pet. For example, for a search word "Samoyed IQ", the entity corresponding to the search word is "Samoyed" in the data base; because the search word includes an IQ attribution, and therefore the information of the entity corresponding to the search word may be IQ information of the corresponding entity, i.e. IQ information of Samoyed, such as IQ rank of Samoyed.

In some embodiments, the second search result includes information of each entity in a field and/or attribution to which the search word belongs. Generally, a plurality of entities are provided in one field and/or attribution, and therefore the second search result may include information of a plurality of entities. For example, if the search word is "Samoyed IQ", the field and attribution of the search word may be dog field and IQ attribution respectively, and therefore the second search result includes IQ information of each dog species in the dog field.

In some embodiments, after obtaining the IQ information of each dog species in the dog field, all dog species may be sequenced according to the IQ information, such as sequencing according to a descending order of IQ, thus obtaining a finally displayed second search result.

For example, a field to which Samoyed belongs may be further obtained according to entity information of Samoyed, i.e. Husky is one species of dog. In addition, IQ is one attribution of a single pet entity, which is a horizontal attribution of an entity in the pet field. In order to display more information to the user, IQ attribution information that the user would like to know may be extended horizontally, and therefore IQ attribution data of all dog species may be obtained. The picture information and title information of all dog entities may be obtained, and may be integrated and sequenced according to IQ, thus showing the user with systematic and complete information, such as structured information of IQ rank of all dog species. In this way, a searching experience of the user may be improved.

In some embodiments, information of the entity corresponding to the first search result and/or the second search result may include a picture and/or title of the entity.

At step S24, the server sends the first search result and the second search result to the search engine.

At step S25, the search engine displays the first search result and the second search result.

In some embodiments, the first search result and the second search result may be displayed in different areas.

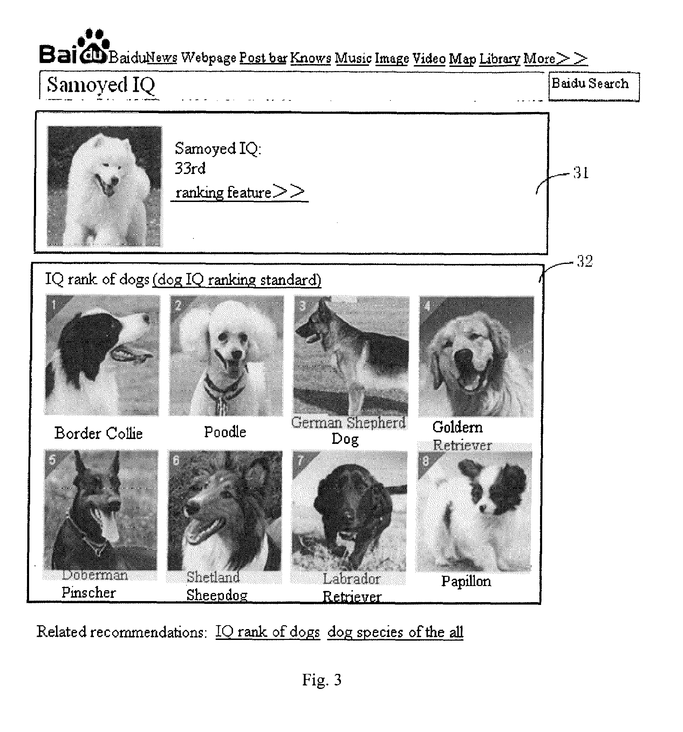

In some embodiments, entities corresponding to the first search result and the second search result include a picture and a title. In the present embodiment, when the search word is "Samoyed IQ", as shown in Fig. 3, results shown in Fig. 3 may be displayed, and the results include a first search result 31 and a second search result 32. In some embodiments, in addition to displaying the first search result and the second search result, a sequencing basis may be displayed. For example, as shown in Fig. 3, in addition to the first search result and the second search result, a rank feature, a dog IQ ranking standard and the like are shown. In some embodiments, a uniform resource locator (URL) link indicating a source of the rank basis may be stored in the attribution of the entity in the data base, thus facilitating the view of the user. IQ of dogs have a rank, for example, dogs ranked in top 10 of the IQ rank may have certain features in memory and obedience, and these features may be represented by ranking features. In some embodiments, related recommendations may be shown, such as IQ rank of dogs, dog species of the all, etc.

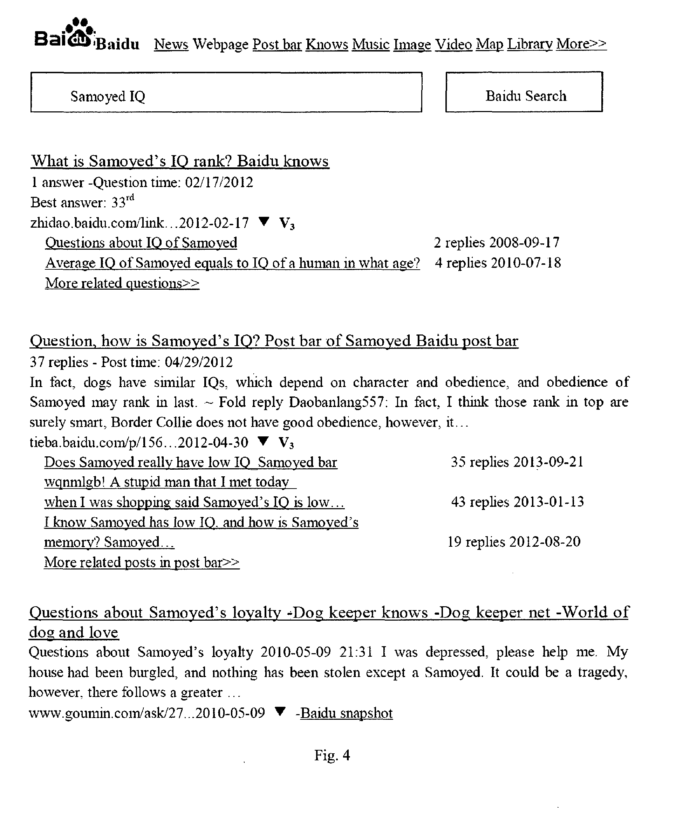

Fig. 4 is a schematic diagram showing a conventional displayed search result. In comparison with Fig. 4, embodiments of Fig. 3 not only display a main requirement such as IQ rank of Samoyed, but also display IQ ranks of other dog species. Therefore, with the method according to embodiments of the present disclosure, more complete information may be provided to the user, thus satisfying requirements of the user.

In some embodiments, a search result webpage may be redirected to after a picture and/or title of an entity in the first search result and/or the second search result is clicked. In an embodiment, as an example, an entity in the second search result is clicked, and the method further includes the following steps.

At step S26, the search engine redirects to a search result webpage of an entity in the second search result after a picture and/or title of the entity in the second search result is clicked.

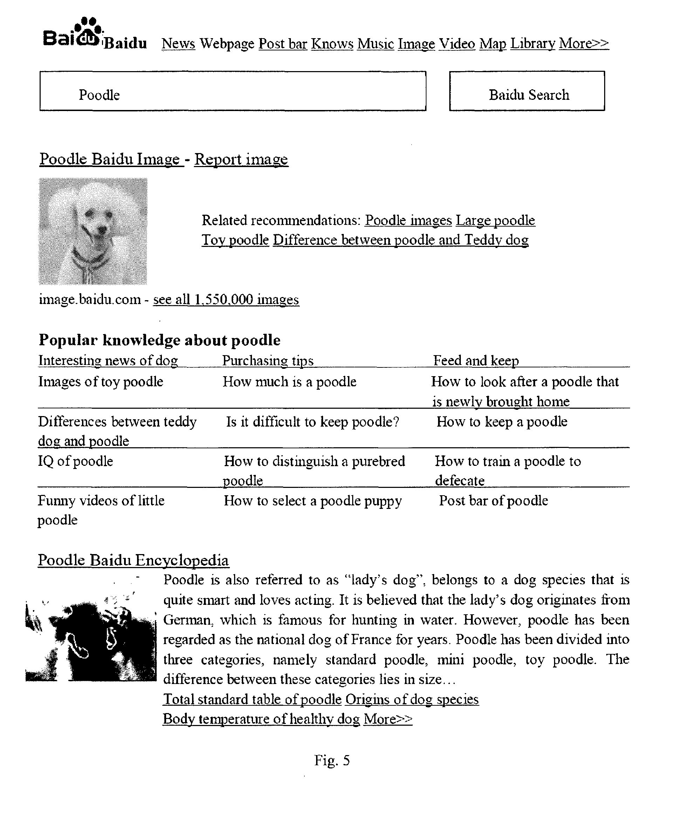

For example, after a picture of a poodle dog in the second search result is clicked, as shown in Fig. 5, a search result webpage of the poodle dog may be redirected to.

In some embodiments, in addition to the first search result and the second search result, a search result in the related art may be displayed. For example, in addition to contents shown in Fig. 3, contents shown in Fig. 4 may be displayed.

With the search result displaying method according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied. Moreover, with the search result displaying method according to embodiments of the present disclosure, since a corresponding webpage may be redirected to after a picture and/or title of an entity is clicked, more detailed information may be provided to the user, thus improving the experience of the user.

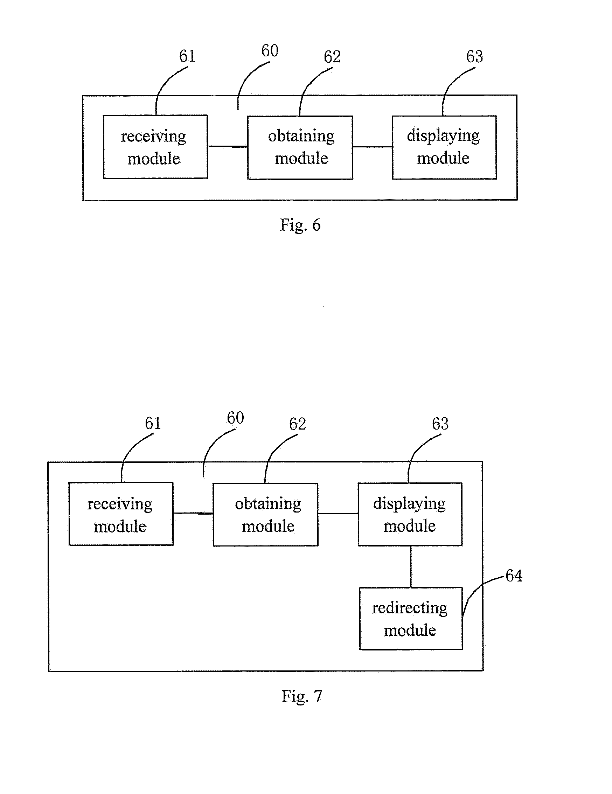

Fig. 6 is a block diagram of a search result displaying device according to an embodiment of the present disclosure. As shown in Fig. 6, the search result displaying device 60 includes a receiving module 61, an obtaining module 62 and a displaying module 63.

The receiving module 61 is configured to receive a search word.

For example, if a user would like to keep a dog and focus on IQ of the dog, the search word input by the user may include "Samoyed IQ".

The obtaining module 62 is configured to obtain a first search result and a second search result according to the search word. In some embodiments, the first search result includes information of an entity corresponding to the search word, and the second search result includes information of each entity in a field and/or attribution to which the search word belongs.

In some embodiments, the first search result may be used to satisfy a main requirement of the user, and the information of the entity corresponding to the search word may include search result information of the entity described by the search word. For example, as to the above search word "Samoyed IQ", information of the entity corresponding to the search word may be information of Samoyed, for example, rank of Samoyed IQ.

In the specification of the present disclosure, the term "entity" may refer to distinguishable things existing in the objective word. The entity may include a person, an object, or an abstract concept. For example, the entity may include at least one of "Samoyed" and "Husky".

In some embodiments, the second search result is configured to provide relatively complete information in the field and/or attribution to which the search word belongs, so as to satisfy potential requirements of the user. The information of each entity in the field and/or attribution to which the search word belongs may refer to search result information of each entity in a field and/or attribution to which the entity described by the search word belongs. For example, for the above search word "Samoyed IQ", the field to which the search word belongs is dog, and the attribution to which the search word belongs is IQ. The second search result may include an IQ rank of each dog in the dog field. For example, the second search result may further include an IQ of Husky and an IQ of Tibetan mastiff.

The displaying module 63 is configured to display the first search result and the second search result.

In some embodiments, the first search result and the second search result may be displayed in different areas. For example, the first search result is displayed above the second search result.

In the related art, only a search result of the main requirement is obtained. For example, when the search word is "Samoyed IQ", only information related to IQ of Samoyed is displayed, and after this search action, the user may add a search word "Husky IQ". The potential requirement of the user, however, may be which dog has a higher IQ and is suitable to keep. The user, however, does not know how to achieve the object. Therefore, the user may give up searching after several searches, without satisfying the requirements.

With the search result displaying device according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied, and the search efficiency may be improved.

Fig. 7 is a block diagram of a search result displaying device according to another embodiment of the present disclosure.

In some embodiments, the obtaining module 62 is configured to obtain information of an entity corresponding to the search word from a pre-established database and to determine the information of the entity corresponding to the search word as a first search result, in which information of each entity in at least one field and/or attribution is stored in the data base.

In some embodiments, the data base may be a structured entity data base, and the data base may record each entity and attribution information corresponding to each entity. For example, the attribution information of each pet type may be pre-collected, and the attribution information includes, for example, keeping difficulty, IQ, and price. Then, each pet type and attribution information of the each pet type may be correspondingly stored in the structured entity data base. In some embodiments, the entities in the structured entity data base may have relations, such as a peering relation and an affiliation relation. For example, Husky and Samoyed are in a peering relation, while Husky and dog are in an affiliation relation. When obtaining information of an entity, the information of the entity may be obtained according to an index searching. Alternatively, the information of the entity may be obtained by searching according to the relation between entities.

In some embodiments, the first search result includes information of the entity corresponding to the search word. Each entity may be a species of each pet. For example, for a search word "Samoyed IQ", the entity corresponding to the search word is "Samoyed" in the data base; because the search word includes an IQ attribution, and therefore the information of the entity corresponding to the search word may be IQ information of the corresponding entity, i.e. IQ information of Samoyed, such as IQ rank of Samoyed.

In some embodiments, the obtaining module 62 is further configured to obtain a field and/or attribution to which the search word belongs, to obtain information of each entity in the field and/or attribution, to integrate the information of each entity, and to obtain the second search result.

In some embodiments, the second search result includes information of each entity in a field and/or attribution to which the search word belongs. Generally, a plurality of entities are provided in one field and/or attribution, and therefore the second search result may include information of a plurality of entities. For example, if the search word is "Samoyed IQ", the field and attribution of the search word may be dog field and IQ attribution respectively, and therefore the second search result includes IQ information of each dog species in the dog field.

In some embodiments, the obtaining module 62 is further configured to sequence the information of each entity according to a parameter in the information of each entity.

In some embodiments, after obtaining the IQ information of each dog species in the dog field, all dog species may be sequenced according to the IQ information, such as sequencing according to a descending order of IQ, thus obtaining a finally displayed second search result.

For example, a field to which Samoyed belongs may be further obtained according to entity information of Samoyed, i.e. Husky is one species of dog. In addition, IQ is one attribution of a single pet entity, which is a horizontal attribution of an entity in the pet field. In order to display more information to the user, IQ attribution information that the user would like to know may be extended horizontally, and therefore IQ attribution data of all dog species may be obtained. The picture information and title information of all dog entities may be obtained, and may be integrated and sequenced according to IQ, thus showing the user with systematic and complete information, such as structured information of IQ rank of all dog species. In this way, a searching experience of the user may be improved.

In some embodiments, the displaying module 63 is configured to display the first search result and the second search result in different areas. For example, the first search result may be displayed above the second search result.

In some embodiments, the first and/or second search result may include a picture and/or title of a corresponding entity.

In some embodiments, entities corresponding to the first search result and the second search result include a picture and a title. In the present embodiment, when the search word is "Samoyed IQ", as shown in Fig. 3, results shown in Fig. 3 may be displayed. In some embodiments, in addition to displaying the first search result and the second search result, a sequencing basis may be displayed. For example, as shown in Fig. 3, in addition to the first search result and the second search result, a rank feature, a dog IQ ranking standard and the like are shown. In some embodiments, a URL link indicating a source of the rank basis may be stored in the attribution of the entity in the data base, thus facilitating the view of the user. IQ of dogs have a rank, for example, dogs ranked in top 10 of the IQ rank may have certain features in memory and obedience, and these features may be represented by ranking features. In some embodiments, related recommendations may be shown, such as IQ rank of dogs, dog species of the all, etc.

Fig. 4 is a schematic diagram showing a conventional displayed search result. In comparison with Fig. 4, embodiments of Fig. 3 not only display a main requirement such as IQ rank of Samoyed, but also display IQ ranks of other dog species. Therefore, with the device according to embodiments of the present disclosure, more complete information may be provided to the user, thus satisfying requirements of the user.

In some embodiments, a search result webpage may be redirected to after a picture and/or title of an entity in the first search result and/or the second search result is clicked. In the present embodiment, the device further includes a redirecting module 64.

The redirecting module 64 is configured to redirect to a search result webpage of an entity in the second search result after a picture and/or title of the entity in the second search result is clicked. Alternatively, the redirecting module 64 is configured to redirect to a search result webpage of an entity in the first search result after a picture and/or title of the entity in the first search result is clicked.

For example, after a picture of a poodle dog in the second search result is clicked, as shown in Fig. 5, a search result webpage of the poodle dog may be redirected to.

In some embodiments, in addition to displaying the first search result and the second search result, a search result in the related art may be displayed. For example, in addition to contents shown in Fig. 3, contents shown in Fig.4 may be displayed.

With the search result displaying device according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied. Moreover, with the search result displaying device according to embodiments of the present disclosure, since a corresponding webpage may be redirected to after a picture and/or title of an entity is clicked, more detailed information may be provided to the user, thus improving the experience of the user.

Embodiments of the present disclosure further provide a client device. The client device includes a shell, a processor, a memory, a circuit board and a power circuit. In some embodiments, the circuit board is disposed in an interior space enclosed by the shell, the processor and the memory are both disposed on the circuit board, the power circuit is configured to provide power to each circuit and components of the client device, the memory is configured to store an executable program code, and the processor is configured to run a program corresponding to the executable program code by reading the executable program code so as to execute the following steps A to C.

At step A, a search word is received.

For example, if a user would like to keep a dog and focus on an intelligence quotient (IQ) of the dog, the search word input by the user may include "Samoyed IQ".

At step B, a first search result and a second search result are obtained according to the search word, in which the first search result includes information of an entity corresponding to the search word, and the second search result includes information of each entity in a field and/or attribution to which the search word belongs.

In some embodiments, the first search result may be used to satisfy a main requirement of the user, and the information of the entity corresponding to the search word may include search result information of the entity described by the search word. For example, as to the above search word "Samoyed IQ", information of the entity corresponding to the search word may be information of Samoyed, for example, rank of Samoyed IQ.

In the specification of the present disclosure, the term "entity" may refer to distinguishable things existing in the objective word. The entity may include a person, an object, or an abstract concept. For example, the entity may include at least one of "Samoyed" and "Husky".

In some embodiments, the second search result is configured to provide relatively complete information in the field and/or attribution to which the search word belongs, so as to satisfy potential requirements of the user. The information of each entity in the field and/or attribution to which the search word belongs may refer to search result information of each entity in a field and/or attribution to which the entity described by the search word belongs. For example, for the above search word "Samoyed IQ", the field to which the search word belongs is dog, and the attribution to which the search word belongs is IQ. The second search result may include an IQ rank of each dog in the dog field. For example, the second search result may further include an IQ of Husky and an IQ of Tibetan mastiff.

At step C, the first search result and the second search result are displayed.

In some embodiments, the first search result and the second search result may be displayed in different areas. For example, the first search result is displayed above the second search result.

In the related art, only a search result of the main requirement is obtained. For example, when the search word is "Samoyed IQ", only information related to IQ of Samoyed is displayed, and after this search action, the user may add a search word "Husky IQ". The potential requirement of the user may be which dog has higher IQ and is suitable to keep. The user, however, does not know how to achieve the object. Therefore, the user may give up searching after several searches, without satisfying the requirements.

With the client device according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied, and the search efficiency may be improved.

In some embodiments, the processor is configured to run a program corresponding to the executable program code by reading the executable program code so as to execute the following steps D to I.

At step D, a search word is received.

For example, a user inputs a search word "Samoyed IQ".

At step E, the search word is sent to a server.

At step F, the server obtains a first search result from a pre-established data base according to the search word, obtains a field and attribution to which the search word belongs, obtains information of the attribution of each entity in the field, and obtains a second search result.

In some embodiments, the data base may be a structured entity data base, and the data base may record each entity and attribution information corresponding to each entity. For example, the attribution information of each pet type may be pre-collected, and the attribution information includes, for example, keeping difficulty, IQ, and price. Then, each pet type and attribution information of the each pet type may be correspondingly stored in the structured entity data base. In some embodiments, the entities in the structured entity data base may have relations, such as a peering relation and an affiliation relation. For example, Husky and Samoyed are in a peering relation, while Husky and dog are in an affiliation relation. When obtaining information of an entity, the information of the entity may be obtained according to an index searching. Alternatively, the information of the entity may be obtained by searching according to the relation between entities.

In some embodiments, the first search result includes information of the entity corresponding to the search word. Each entity may be a species of each pet. For example, for a search word "Samoyed IQ", the entity corresponding to the search word is "Samoyed" in the data base; because the search word includes an IQ attribution, and therefore the information of the entity corresponding to the search word may be IQ information of the corresponding entity, i.e. IQ information of Samoyed, such as IQ rank of Samoyed.

In some embodiments, the second search result includes information of each entity in a field and/or attribution to which the search word belongs. Generally, a plurality of entities are provided in one field and/or attribution, and therefore the second search result may include information of a plurality of entities. For example, if the search word is "Samoyed IQ", the field and attribution of the search word may be dog field and IQ attribution respectively, and therefore the second search result includes IQ information of each dog species in the dog field.

In some embodiments, after obtaining the IQ information of each dog species in the dog field, all dog species may be sequenced according to the IQ information, such as sequencing according to a descending order of IQ, thus obtaining a finally displayed second search result.

For example, a field to which Samoyed belongs may be further obtained according to entity information of Samoyed, i.e. Husky is one species of dog. In addition, IQ is one attribution of a single pet entity, which is a horizontal attribution of an entity in the pet field. In order to display more information to the user, IQ attribution information that the user would like to know may be extended horizontally, and therefore IQ attribution data of all dog species may be obtained. The picture information and title information of all dog entities may be obtained, and may be integrated and sequenced according to IQ, thus showing the user with systematic and complete information, such as structured information of IQ rank of all dog species. In this way, a searching experience of the user may be improved.

In some embodiments, information of the entity corresponding to the first search result and/or the second search result may include a picture and/or title of the entity.

At step G, the first search result and the second search result are received.

At step H, the first search result and the second search result are displayed.

In some embodiments, the first search result and the second search result may be displayed in different areas.

In some embodiments, entities corresponding to the first search result and the second search result include a picture and a title. In the present embodiment, when the search word is "Samoyed IQ", as shown in Fig. 3, results shown in Fig. 3 may be displayed. In some embodiments, in addition to displaying the first search result and the second search result, a sequencing basis may be displayed. For example, as shown in Fig. 3, in addition to the first search result and the second search result, a rank feature, a dog IQ ranking standard and the like are shown. In some embodiments, a URL link indicating a source of the rank basis may be stored in the attribution of the entity in the data base, thus facilitating the view of the user. IQ of dogs have a rank, for example, dogs ranked in top 10 of the IQ rank may have certain features in memory and obedience, and these features may be represented by ranking features. In some embodiments, related recommendations may be shown, such as IQ rank of dogs, dog species of the all, etc.

Fig. 4 is a schematic diagram showing a conventional displayed search result. In comparison with Fig. 4, embodiments of Fig. 3 not only display a main requirement such as IQ rank of Samoyed, but also display IQ ranks of other dog species. Therefore, with the method according to embodiments of the present disclosure, more complete information may be provided to the user, thus satisfying requirements of the user.

In some embodiments, a search result webpage may be redirected to after a picture and/or title of an entity in the first search result and/or the second search result is clicked. In an embodiment, as an example, an entity in the second search result is clicked, and the method further includes the following steps.

At step I, a search result webpage of an entity in the second search result is redirected to after a picture and/or title of the entity in the second search result is clicked.

For example, after a picture of a poodle dog in the second search result is clicked, as shown in Fig. 5, a search result webpage of the poodle dog may be redirected to.

In some embodiments, in addition to the first search result and the second search result, a search result in the related art may be displayed. For example, in addition to contents shown in Fig. 3, contents shown in Fig. 4 may be displayed.

With the client device according to embodiments of the present disclosure, by obtaining and displaying the first search result, a main requirement of the user corresponding to the search word may be satisfied; while by obtaining and displaying the second search result, the user may learn total information in the field systematically. Therefore, requirements of the user may be satisfied from point to surface, and the user may learn the entire knowledge and information in a field rapidly, thus avoiding a cost for inputting repeatedly, multiple searching, and pre-learning related knowledge. Even in a condition that the user only knows knowledge of one point in a field, with the search result displaying method according to embodiments of the present disclosure, the entire field may be completely learned by the user from point to surface, and relatively complete information in the field related to a search point of the user may be provided, such that requirements of the user may be satisfied. Moreover, with the client device according to embodiments of the present disclosure, since a corresponding webpage may be redirected to after a picture and/or title of an entity is clicked, more detailed information may be provided to the user, thus improving the experience of the user.

Embodiments of a further aspect of the present disclosure provide a computer readable storage medium. The computer readable storage medium includes a computer program for executing the search result displaying method according to embodiments of an aspect of the present disclosure, when running on a computer.

In addition, terms such as "first" and "second" are used herein for purposes of description and are not intended to indicate or imply relative importance or significance or impliedly indicate quantity of the technical feature referred to. Thus, the feature defined with "first" and "second" may comprise one or more this feature. In the description of the present disclosure, "a plurality of" means two or more than two this features, unless specified otherwise.

Any procedure or method described in the flow charts or described in any other way herein may be understood to include one or more modules, portions or parts for storing executable codes that realize particular logic functions or procedures. Moreover, advantageous embodiments of the present disclosure includes other implementations in which the order of execution is different from that which is depicted or discussed, including executing functions in a substantially simultaneous manner or in an opposite order according to the related functions. This should be understood by those skilled in the art which embodiments of the present disclosure belong to.

It is understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs include one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks or CD, etc.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the phrases throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A search result displaying method, comprising:
receiving a search word;
obtaining a first search result and a second search result according to the search word, wherein the first search result comprises information of an entity corresponding to the search word, and the second search result comprises information of each entity in a field and/or attribution to which the search word belongs; and
displaying the first search result and the second search result.

2. The method according to claim 1, wherein obtaining a first search result according to the search word comprises:
obtaining information of an entity corresponding to the search word from a pre-established data base containing information of each entity in at least one field and/or attribution; and
determining the information of the entity corresponding to the search word as the first search result.

3. The method according claim 1 or 2, wherein obtaining a second search result according to the search word comprises:
obtaining a field and/or attribution to which the search word belongs;
obtaining information of each entity in the field and/or attribution to which the search word belongs from the data base; and
integrating the information of each entity and obtaining the second search result.

4. The method according to claim 3, wherein integrating the information of each entity comprises:
sequencing the information of each entity according to a parameter in the information of each entity.

5. The method according to any of claims 2-4, wherein the data base comprises a structured entity data base; and/or
the first search result and/or the second search result comprises a picture and/or title of a corresponding entity.

6. The method according to any of claims 1-5, wherein displaying the first search result and the second search result comprises:
displaying the first search result and the second search result in different areas respectively.

7. The method according to claim 6, further comprising:
redirecting to a search result webpage of the entity in the second search result after a picture and/or title of an entity in the second search result is clicked; or
redirecting to a search result webpage of the entity in the first search result after a picture and/or title of an entity in the first search result is clicked.

8. A search result displaying device comprising:
a receiving module configured to receive a search word;
an obtaining module configured to obtain a first search result and a second search result according to the search word, wherein the first search result comprises information of an entity corresponding to the search word, and the second search result comprises information of each entity in a field and/or
attribution to which the search word belongs; and
a displaying module configured to display the first search result and the second search result.

9. The device according to claim 8, wherein the obtaining module obtains information of an entity corresponding to the search word from a pre-established data base containing information of each entity in at least one field and/or attribution, and determines the information of the entity corresponding to the search word as the first search result.

10. The device according claim 8 or 9, wherein the obtaining module is further configured to obtain a field and/or attribution to which the search word belongs, to obtain information of each entity in the field and/or attribution to which the search word belongs from the data base, and to integrate the information of each entity and to obtain the second search result.

11. The device according to claim 10, wherein the obtaining module sequences the information of each entity according to a parameter in the information of each entity.

12. The device according to any of claims 9-11, wherein the data base comprises a structured entity data base; and/or
the first search result and/or the second search result comprises a picture and/or title of a corresponding entity.

13. The device according to any of claims 8-12, wherein the displaying module displays the first search result and the second search result in different areas respectively.

14. The device according to claim 13, further comprising a redirecting module configured to redirect to a search result webpage of an entity in the second search result after a picture and/or title of the entity in the second search result is clicked, or to redirect to a search result webpage of an entity in the first search result after a picture and/or title of the entity in the first search result is clicked.

15. A computer readable storage medium, comprising a computer program for executing steps of:
receiving a search word;
obtaining a first search result and a second search result according to the search word, wherein the first search result comprises information of an entity corresponding to the search word, and the second search result comprises information of each entity in a field and/or attribution to which the search word belongs; and
displaying the first search result and the second search result,
when running on a computer.
